## Europäisches Patentamt
## European Patent Office
## Office européen des brevets

(19)

(11) Numéro de publication: **0 055 963**
**B1**

(12) **FASCICULE DE BREVET EUROPEEN**

(45) Date de publication du fascicule du brevet:
17.04.85

(51) Int. Cl.⁴: **G 21 C 1/02**

(21) Numéro de dépôt: 81402072.3

(22) Date de dépôt: 23.12.81

(54) **Réacteur nucléaire refroidi par un métal liquide et comprenant une cuve posée à fond froid.**

(30) Priorité: 30.12.80 FR 8027759

(43) Date de publication de la demande:
14.07.82 Bulletin 82/28

(45) Mention de la délivrance du brevet:
17.04.85 Bulletin 85/16

(84) Etats contractants désignés:
**DE GB IT**

(56) Documents cités:
**EP - A - 0 018 262**
**EP - A - 0 022 714**
**FR - A - 1 483 407**
**FR - A - 2 002 531**
**FR - A - 2 119 834**
**GB - A - 964 841**
**GB - A - 1 299 192**
**GB - A - 2 000 356**

**Rapport ANL-5719 (1957-5) L.J. KOCH et al.:**
**"Experimental Breeder Reactor II (EBR II)", page 148**
**IEE PROCEEDINGS, vol. 128, mars 1981, part C, no. 2,**
**Old Woking, Surrey, GB G. BRIERLEY et al.: "Plant**
**improvements in the prototype fast reactor station at**
**Dounreay", pages 111-116**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris (FR)**

(72) Inventeur: **Costes, Didier, 11-19, Avenue du Château,**
**F-92190 Meudon (FR)**

(74) Mandataire: **Mongrédien, André et al, c/o**
**BREVATOME 25, rue de Ponthieu, F-75008 Paris (FR)**

## Description

La présente invention se rapporte à un réacteur nucléaire refroidi par un métal liquide et concerne plus précisément le supportage de la cuve remplie de métal liquide qui contient le coeur du réacteur.

On sait qu'afin d'assurer la protection biologique, la cuve d'un réacteur nucléaire à neutrons rapides est disposée dans un puits de cuve en béton et obturée à sa partie supérieure par une dalle métallique dont les vides sont remplis de béton. Dans les solutions qui ont été retenues pour les réacteurs Rhapsodie, Phénix et Super Phénix, la dalle repose sur une portée annulaire formée à la partie supérieure du puits de cuve et la cuve est directement suspendue à cette dalle. Cette cuve est remplie d'un métal liquide primaire tel que du sodium qui assure le refroidissement du coeur du réacteur en acheminant la chaleur libérée dans le coeur du réacteur jusqu'à des échangeurs dans lesquels circule un fluide secondaire qui est généralement constitué lui aussi par du sodium. La circulation du métal liquide dans le coeur et dans les échangeurs est assurée par des pompes. La température du sodium primaire est voisine de 540°C à la sortie dur coeur, c'est-à-dire dans la partie haute de la cuve, alors qu'elle redescend à environ 400°C à la sortie des échangeurs, c'est-à-dire dans la partie basse de la cuve.

Dans ce qui suit, le terme »chaud« correspondra à la température du métal liquide à sa sortie du coeur nucléaire, le terme »tiède« à la température du métal liquide sortant des échangeurs et rentrant dans le coeur, et le terme »froid« à une température proche de l'ambiance mais pouvant atteindre par exemple la température de fusion du métal liquide, de l'ordre de 100°C pour le sodium.

Dans les réalisations les plus connues, la cuve du réacteur est suspendue à la dalle supérieure et lui transmet une charge considérable. Pour éviter un fluage exagéré de la partie supérieure des parois de cuve, on est conduit à la refroidir en faisant circuler le long des ces parois du sodium »tiède«; il en résulte une certaine perte thermodynamique, et cette disposition requiert d'autre part l'utilisation de baffles d'une réalisation onéreuse. A cet inconvénient des cuves suspendues s'ajoute une certaine sensibilité aux mouvements sismiques éventuels.

Comme l'illustre notamment le document GB-A-964 841, il a aussi été proposé précédement de poser au contraire le fond de cuve »tiède« sur le fond du puits de cuve »froid«, par le moyen de supports répartis permettant des mouvements radiaux de dilatation différentielle. Ces supports étaient par exemple des rouleaux ou des bielles, ou encore des patins de stellite ou de graphite. Cette solution n'a pas été adoptée, car elle n'a pas semblé assurer une fiabilité suffisante.

Une autre solution, effectivement utilisée, consiste à supporter la cuve à fond »tiède« en partie basse, mais seulement en périphérie par des supports à déplacements radiaux; les supports reçoivent alors des sollicitations individuelles plus élevées, mais sont plus facilement inspectables, tandis que par rapport aux cuves suspendues, la nécessité subsiste de transférer en périphérie des charges internes.

Par ailleurs, le document FR-A-2 002 531 décrit un réacteur à boucles, dans lequel l'enceinte de béton dans laquelle est logé le coeur du réacteur est refroidie jusqu'à une température voisine de 50°C, ce qui a pour effet de solidifier le sodium primaire à proximité des parois. On évite ainsi d'avoir recours à une enceinte à double paroi.

La présente invention a pour objet la réalisation d'un réacteur nucléaire à neutrons rapides dans lequel le supportage de la cuve rend sa fabrication plus facile et plus économique que celle des solutions connues mentionnées précédemment, cette cuve présentant par ailleurs des caractéristiques de sûreté au moins égales à celles des cuves existantes.

A cet effet et conformément à la présente invention, il est proposé un réacteur nucléaire à neutrons rapides refroidi par un métal liquide à circuit primaire intégré, comprenant une cuve remplie de métal liquide et contenant le coeur du réacteur, une dalle de fermeture obturant la cuve à sa partie supérieure et un puits de cuve dans lequel est disposée ladite cuve, le fond de la cuve reposant sur le fond du puits de cuve, des moyens étant prévus pour refroidir le fond de la cuve, caractérisé en ce que lesdits moyens de refroidissement refroidissent le fond de la cuve à une température au plus égale à environ 100°C, et en ce que les zones internes de la cuve parcourues par une circulation forcée de métal liquide sont entièrement situées au-dessus d'un plan horizontal limite, ce dernier étant situé à une hauteur donnée au dessus du plan horizontal supérieur du fond de la cuve, ladite hauteur constituant une hauteur de transition dans laquelle le métal liquide est immobilisé en stratification thermique. De préférence, la hauteur de transition est égale à au moins un dixième du diamétre de la cuve.

L'utilisation d'un fond de cuve froid permet de poser la cuve et l'ensemble des charges internes sur le fond du puits de cuve, par l'intermédiaire de supports très simples puisque n'ayant pas à compenser les dilatations. De préférence, l'espace formé entre le fond de puits de cuve et le fond de cuve, espace traversé par lesdits supports, est utilisé pour la circulation d'un fluide de refroidissement du fond de cuve. Le susdit espace peut alsors être divisé verticalement en un espace inférieur assurant une circulation centripète du fluide et un espace supérieur assurant une circulation centrifuge au contact du fond de cuve, les deux espaces étant séparés par un carénage pouvant comporter des parties amovibles pour faciliter les inspections. Les supports de cuve traversent ce carénage. Les deux espaces peuvent communiquer au voisinage de l'axe de la cuve par une chicane susceptible de se remplir de métal liquide en cas de fuite, arrêtant la circulation du fluide de refroidissement susceptible de réagir avec le métal liquide.

Pour limiter les défauts de forme lors de la construction de fond de puits de cuve et de fond de cuve, et pour permettre un centrage de la cuve reposant gravitairement sur ses supports, on choisit avantageusement pour les deux fonds und forme sensiblement conique pointe en bas.

La hauteur de transition correspondant au gradient thermique en fond de cuve a pour conséquence une perte thermique qui peut être tolérée dans un réacteur de forte puissance. Toutefois, cette perte peut être réduite en disposant à l'intérieur de ladite hauteur de transition des inclusions calorifuges présentant une conductivité thermique inférieure à celle du métal liquide, de façon à limiter le flux thermique vers le bas sur ladite hauteur.

Enfin, étant donné que la cuve repose sur le fond du puits de cuve, la liaison entre la partie supérieure de la cuve et la dalle a simplement pour fonction d'assurer l'étanchéité du confinement primaire tout en autorisant les dilatations de la cuve. A cet effet, la paroi latérale de la cuve peut être raccordée à la dalle par l'intermédiaire d'un soufflet de dilatations à ondes.

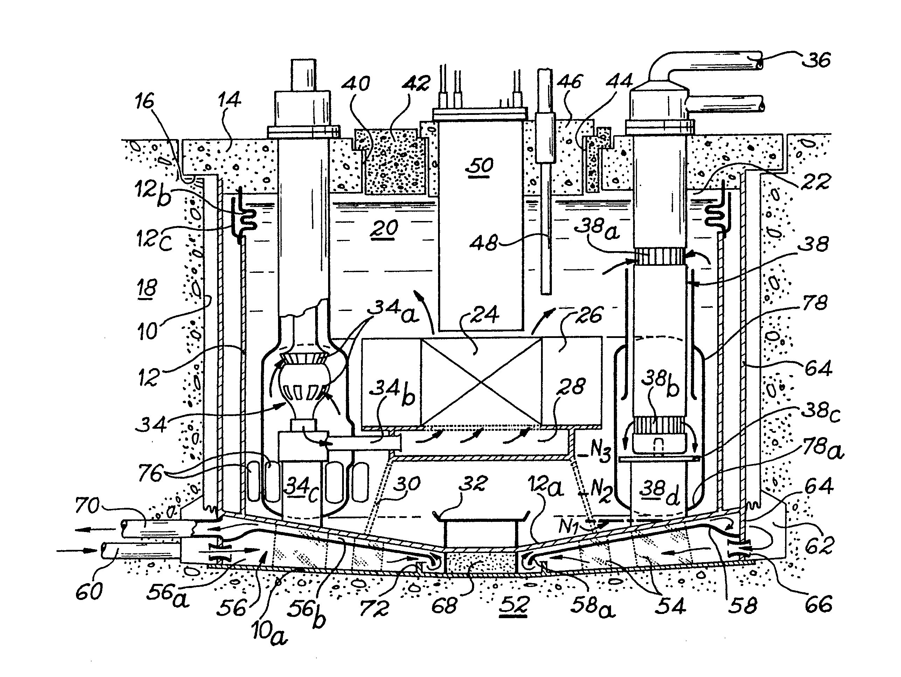

On décrira maintenant, à titre d'exemple non limitatif, un mode de réalisation de l'invention en se référant au dessin annexé dans lequel la figure unique est une vue en coupe verticale illustrant schématiquement un réacteur nucléaire à neutrons rapides à cuve posée et à fond froid réalisé conformément aux enseignements de la présente invention.

De façon connue en soi, le réacteur nucléaire à neutrons rapides dont le circuit primaire intégré est représenté sur la figure comprend un bâtiment réacteur en béton définissant un puits de cuve 10 à l'intérieur duquel est placée une cuve principale 12 présentant une configuration cylindrique à axe vertical, cette cuve 12 étant obturée à son extrémité supérieure par une dalle métallique garnie de béton 14. Toujours de façon connue, la cuve principale 12 est remplie de sodium liquide 20 surmonté à proximité de la dalle 14 par un ciel 22 de gaz neutre tel que de l'argon. La cuve principale 12 contient également le coeur 24 du réacteur qui est constitué par les assemblages combustibles contenant le combustible nucléaire dont la fission dégage l'énergie calorifique du réacteur, ainsi que la protection neutronique latérale 26 qui entoure le coeur 24. Le coeur 24 et la protection latérale 26 sont supportés par un sommier 28 qui repose sur le fond 12a de la cuve principale 12 par l'intermédiaire d'un platelage 30. Toujours de façon connue, un plateau d'arrêt ou cendrier 32 repose également sur le fond 12a de la cuve principale en-dessous de coeur 24 pour recueillir les produits résultant d'une éventuelle fusion du coeur 24.

Dans la variante de réalisation représentée qui concerne un réacteur nucléaire à neutrons rapides du type intégré, l'ensemble du circuit primaire est logé à l'intérieur de la cuve principale 12. Ainsi, la circulation du sodium 20 dans le coeur 24 nécessaire à l'extraction de la chaleur produite dans ce dernier par la réaction de fission est commandée par des pompes 34 placées à l'intérieur de la cuve 12, l'une seulement de ces pompes étant représentée sur la figure. De même, la transmission à un circuit de sodium secondaire 36 d'une partie de la chaleur ainsi extraite du coeur 24 par le sodium primaire 20 est réalisée au moyen d'échangeurs intermédiaires 38 également disposés à l'intérieur de la cuve 12 et dont l'un seulement est représenté sur la figure. De façon connue, les pompes 34 et les échangeurs 38 sont suspendus à la dalle 14.

Toujours de façon connue, la dalle de béton 14 présente dans sa partie centrale une ouverture 40 dans laquelle est reçu un premier bouchon tournant 42, ce bouchon 42 étant lui-même percé d'une ouverture 44 excentrée par rapport à l'ouverture 40 et dans laquelle est reçu un second bouchon tournant 46. Le bouchon tournant 46 porte au moins un bras de transfert 48 permettant la manutention des assemblages du coeur 24 et de la protection neutronique latérale 26 et un couvercle de coeur 50 protant les barres de contrôle et divers instruments de contrôle et de mesure.

Conformément à la présente invention, le fond 12a de la cuve principale 12 repose par gravité sur le fond ou radier inférieur en béton 52 du puits de cuve 10 garni d'une tôle de protection et de répartition 10a par l'intermédiaire de supports 54 qui sont régulièrement répartis afin de définir entre les fonds 12a et 52 un espace 56. Cet espace 56 est utilisé dans la variante de réalisation représentée pour réaliser un circuit de refroidissement à air permettant de refroidir le fond 12a de la cuve principale 12. A cet effet, l'espace 56 est divisé verticalement en un espace inférieur 56a et un espace supérieur 56b par un carénage 58. L'air de refroidissement, de préférence pulsé, et sortant par exemple d'un échangeur de chaleur (non représenté) est acheminé par au moins une tuyauterie radiale d'entrée 60 traversant le mur 18 du puits de cuve dans un anneau collecteur 62 défini entre ce dernier et une jupe ou virole 64 disposée entre la périphérie du fond 12a et la fond 52 et servant au supportage de la dalle 14 comme on le verra plus loin. L'anneau collecteur 62 communique avec l'espace inférieur 56a par des passages 66, de telle sorte qu'il se produit dans cet espace inférieur un écoulement radial centripète d'air. Le carénage 58 définit avec une virole 68 disposée en-dessous du cendrier 32, entre les fonds 12a et 52, un espace annulaire par lequel l'espace inférieur 56a communique avec l'espace supérieur 56b. Il se produit ainsi dans ce dernier un écoulement radial centrifuge de l'air de refroidissement qui se trouve accéléré par le fait que la largeur de l'espace 56b est très faible. A sa périphérie externe, cet espace supérieur 56b s'élargit pour définir un collecteur annulaire de sortie qui communique, par au moins une tuyauterie radiale de sortie 70 traversant la paroi 64 et le mur 18 avec l'échangeur de refroidissement déjà mentionné.

Afin de permettre la circulation de l'air de refroidissement dans l'espace 56, les supports 54 sont constitués dans la variante de réalisation représentée par des voiles radiaux en acier. Toutefois, conformément à une autre variante de réalisation non représentée, ils pourraient également être constitués par des colonnes tubulaires en acier.

De préférence, le carénage 58 est réalisé en éléments amovibles permettant des éventuelles inspection et réparation du fond 12a de la cuve 12 en circulant dans l'espace 56 entre les supports 54. A cet effet, on peut prévoir de rendre l'espace 56 accessible à l'arrêt.

Pour des raisons de sécurité qui apparaitront dans la suite de la description, on peut prévoir comme on l'a représenté sur la figure une virole cylindrique 72 reliée de façon étanche au fond 52 du puits de cuve dans l'espace inférieur 56a, le rebord périphérique interne 58a du carénage 58 étant incurvé vers le bas entre les viroles 68 et 72 de telle sorte que le rebord supérieur de la virole 72 se trouve audessus du rebord inférieur de la partie 58a.

De plus, la virole 68 est de préférence remplie d'oxydes réfractaires tels que MgO ou $UO_2$, sélectionnés de manière indépendante de l'invention pour ralentir ou arrêter la descente des matériaux fondus en cas de fusion accidentelle du coeur et de percement du fond du cendrier 32 et du fond 12a de la cuve.

Comme on l'a déjà indiqué, le circuit d'air de refroidissement est pulsé en fonctionnement normal au moyen d'un ventilateur (non représenté). Toutefois, ce circuit sera de préférence conçu de façon à pouvoir fonctionner en circulation naturelle, avec des écarts de température accrus, en cas de défaillance de ce ventilateur. Pour cette raison et pour une autre qui apparaîtra par la suite, le reste du circuit de refroidissement est placé à un niveau supérieur à celui de l'espace 56.

Bien entendu, le refroidissement du fond 12a de la cuve principale 12 pourrait être assuré par tout autre moyen connu et notamment par des tubes placés directement en contact avec le fond 12a et dans laquel on ferait circuler un liquide tel que de l'eau. De même, l'air de refroidissement pourrait être remplacé par tout autre gaz.

Afin de limiter les défauts de forme lors de la construction du fond de puits de cuve et du fond de cuve 12, et pour assurer un supportage avec encastrement global de la cuve sur les supports 54 sans avoir à effectuer de soudure entre ces éléments, le fond 12a de la cuve et le fond 10a du puits de cuve présentent de préférence une forme conique comme l'illustre la figure. La paroi latérale de cuve 12, constituant par exemple un cylindre vertical, est soudée au fond 12a de cuve et forme en partie haute une ou plusieurs ondes de soufflet 12b qui sont placées de préférence endessous du niveau libre de sodium 20. De plus, ces ondes de soufflet 12b peuvent être doublées à l'extérieur de la cuve par une virole de garde 12c dont la partie inférieure est soudée sur la cuve 12 et dont le rebord libre supérieure est placé au-dessus du niveau libre de sodium 20 afin d'éviter que ce dernier s'échappe de la cuve principale en cas de rupture des ondes de soufflet 12b. Grâce à ces ondes de soufflet, la paroi latérale de cuve reçoit très peu d'efforts verticaux et se trouve peu sollicitée au fluage, ce qui permet d'éviter son onéreuse »climatisation« par baffles.

La cuve ainsi constituée est entourée par la virole 64 qui se prolonge au-dessus du fond de cuve 12a jusqu'à la dalle 14 pour assurer son supportage, comme le montre la figure. La jonction du fond de cuve 12a à la jupe 64 permet de séparer le circuit de refroidissement du fond et l'espace latéral entre la cuve et la jupe qui est d'autre part calorifugé par des moyens indépendants de l'invention. En cas d'accident très grave impliquant une surchauffe de la jupe 64 et le fluage de celle-ci, la dalle 14 pourrait venir reposer par son rebord 16 sur les murs de béton 18.

La température s'établit par exemple à 100°C dans le plan horizontal supérieur $N_1$ du fond de cuve 12a refroidi, et par exemple à 400°C (»tiède«) dans un plan horizontal figuré $N_3$ au niveau inférieur des zones de circulation forcé du sodium tiède dans la cuve, qui seront détaillées par la suite. Entre les plans $N_1$ et $N_3$ le sodium s'immobilise en stratification thermique, avec gel en partie inférieure. Pour une cuve de 20 m de diamètre on peut adopter une hauteur $N_1 - N_3$ de l'ordre de 2,5 m et il en résulte une perte thermique de l'ordre de 4 Mw. Une telle perte peut être tolérée pour un réacteur de moyenne ou de forte puissance. Elle peut néanmoins être réduite soit en accroissant la hauteur $N_1 - N_3$, soit en disposant dans la tranche de sodium comprise entre les niveaux $N_1$ et $N_3$, et plus précisément entre le niveau $N_3$ et un niveau intermédiaire $N_2$, des inclusions calorifuges 76 qui peuvent être constituées notamment par des blocs de magnésie gainés d'acier inoxydable ou par des caissons fermés à gaz. Ainsi, en utilisant par exemple des inclusions formant des colonnes garnissant 80% de la section de la cuve, on limite les pertes thermiques à environ 1,5 Mw pour une cuve de 20 m de diamètre. Les caissons à gaz présentent l'avantage de s'écraser en cas de surpression accidentelle et d'en limiter ainsi les conséquences. On remarquera toutefois qu'en utilisant les inclusions 76, on ne cherche pas à réduire au minimum les sections de sodium entre les colonnes. En effet, il est nécessaire que la chaleur continue à s'écouler de façon très homogène sur la hauteur de transition $N_1 - N_3$ en gradient thermique, pour assurer un champ régulier de températures et limiter ainsi les contraintes d'origine thermique dans les parois de cuve et les autres structures.

Egalement dans le but d'assurer un champ régulier de températures dans le fond de la cuve 12, le sodium 20 est maintenu à l'état statique

dans la zone $N_1 - N_3$. A cet effet, les pompes 34 et les échangeurs 38 sont placés en totalité au-dessus du niveau supérieur $N_3$, de telle sorte que le sodium liquide chaud sortant à la partie supérieure du coeur 24 pénètre dans les échangeurs de chaleur 38 par des ouvertures 38a formées entre le coeur 24 et la dalle 14, c'est-à-dire très sensiblement au-dessus du niveau $N_3$. De plus, le métal liquide refroidi qui sort des échangeurs 38 par des ouvertures 38b formées à la partie inférieure de ces derniers débouche dans un collecteur annulaire »tiède« 78 entourant le coeur 24 et sa protection neutronique 26. Des écrans métalliques tels que 38c limitent inférieurement au niveau $N_3$ la zone des circulations forcées. C'est également dans le collecteur 78 que sont disposées les pompes 34. Ces dernières prélèvent le sodium à environ 400°C contenu dans le collecteur 78 par des orifices d'entrée 34a pour le réinjecter directement à la partie inférieure du coeur 24 par des conduites de sortie 34b qui communiquent avec le sommier 28. Ainsi, bien que la partie inférieure du collecteur 78 contenant le sodium à 400°C soit placée à l'intérieur de la zone $N_1 - N_3$ à gradient thermique, le sodium 20 qui se trouve dans cette zone, aussi bien à l'intérieur qu'à l'extérieur du collecteur 78, reste statique. Bien entendu, les deux parois verticales du collecteur annulaire 78 forment des viroles qui sont soumises au gradient thermique. Dans la variante de la figure, ces deux viroles se rejoignent inférieurement en un fond de collecteur 78a traversé par des supports 34c et 38d en forme de viroles excentrées par rapport à la cuve et fixés au fond de cuve 12a. Les pompes 34 et les échangeurs 38 peuvent être facilement centrés par ces viroles 34c et 38d. Enfin, afin de rendre le platelage 30 compatible avec le gradient thermique existant dans la tranche $N_1 - N_3$, tout en assurant une grande stabilité vis-à-vis des efforts latéraux tels que sismiques, ce platelage est constitué de préférence par une virole conique à large base comme l'illustre la figure.

Parmi les avantages du réacteur à neutrons rapides à cuve posée et à fond froid réalisé conformément à l'invention, il apparaît à la lecture de la description qui précède qu'il faut mentionner principalement la simplicité et le coût sensiblement moindre des structures par rapport à celles des réacteurs à cuve suspendue. En effet, on a déjà mentionné que la suppression de la fonction de supportage de la paroi verticale de la cuve 12 permet de ne pas avoir à climatiser cette paroi à 400°C comme dans les réacteurs de la technique antérieure, ce qui se manifeste concrètement par la disparition des baffles coûteux utilisés auparavent. De plus, le fond froid 12a, quasi isotherme, qui n'est normalement soumis qu'à de très faibles contraintes, peut être réalisé en acier ordinaire sans risque de décarburation puisqu'il n'est en contact qu'avec du sodium froid ou même gelé. Il en est de même de la jupe 64 dont l'épaisseur peut être de l'ordre de 35 à 40 mm alors que l'épaisseur du fond 12a sera par exemple de 50 mm. Grâce à la présente invention, les pompes et les échangeurs, centrés en haut et en bas, sont aussi plus aisés à réaliser. On notera à cet égard que les pompes 34 peuvent être plongées relativement bas, ce qui rend inutile leur protection thermique latérale par couche d'argon. De plus, la cuve et tous les organes internes, centrés en partie inférieure, prennent une robustesse considérable notamment à l'égard des mouvements sismiques. Cette robustesse permet d'envisager des diamètres de cuve plus importants et l'implantation dans la cuve de générateurs de vapeur convenablement protégés avec suppression des circuits secondaires d'où une grande économie et une moindre sensibilité sismique.

Enfin, on analysera ci-dessous en détail les caractéristiques de sûreté d'un tel réacteur qui apparaissent comme particulièrement bonnes.

Tout d'abord, on peut s'étonner du fait que le fond froid 12a de la cuve ne constitue ici qu'une barrière de protection alors qu'on requiert habituellement au moins deux barrières entre la cuve primaire et l'air interne ou externe au bâtiment. Comme on l'a déjà indiqué précédemment, cette caractéristique, qui conduit elle aussi à une plus grande simplicité et à un moindre coût par rapport aux réacteurs connus, se justifie par le fait que le fond froid 12a est normalement revêtu de sodium gelé, étanche, non activé car immobile après son chargement dans la cuve, ce sodium gelé formant une barrière étanche conditionnée par la permanence du refroidissement. De plus, l'utilisation d'un fond froid simple 12a se justifie par le fait que ce fond maintenu froid n'est soumis qu'à de faibles contraintes d'origine thermique, que son épaisseur peut être importante et qu'il repose sur des appuis 54 régulièrement répartis. En outre, la réalisation du fond de la cuve en acier ordinaire au lieu d'acier inoxydable permet de réduire encore les dilatations.

La présence d'un fond de cuve simple se justifie également par l'accessibilité de ce fond pour inspection et réparation. L'expérience industrielle du réacteur Phénix a démontré que le niveau radioactif à l'arrêt au contact de la cuve pouvait permettre l'accès du personnel, au moins pendant les premières années. Dans le réacteur selon l'invention, le fond de cuve est mieux protégé que dans le réacteur Phénix, du fait de la forte épaisseur de sodium et de la stagnation de celui-ci. Bien entendu, des dispositifs non détaillés ici permettraient si nécessaire de renouveler à la demande la couche inférieure de sodium en lui maintenant une basse activation. On peut donc prévoir l'accessibilité du fond à l'arrêt pendant toute l'exploitation. L'inspection télécommandée du fond se présente également de manière très favorable puisque le fond reste froid en fonctionnement. De plus, le refroidissement à l'air proposé dans le mode de réalisation décrit est extrêmement fiable surtout s'il est secondé par une circulation naturelle. Il en résulte, d'une part, qu'une éventuelle fuite de sodium en marche normale s'effectuerait à basse température et donc sans risque d'inflammation de sodium dans l'air de refroidissement, d'autre part, qu'en cas d'accident conduisant à une fusion partielle du coeur 24, le récepteur ou cendrier 32 serait refroidi de façon suffisamment efficace pour éviter l'attaque du fond 12a. On remarquera à ce propos que dans de tels accidents le glissement possible du fond 12a sur ses supports 54 permet de réduire très sensiblement les efforts supportés par la cuve par suite de sa dilatation. Enfin, dans l'hypothèse d'un percement du fond 12a conduisant à une petite fuite de sodium dans l'air circulant dans l'espace 56, le sodium qui s'échappe de la cuve vient en raison de la forme conique du fond 12a remplir l'espace annulaire défini entre les viroles 68 et 72, ce qui conduit lorsque le sodium vient affleurer le bord supérieur de la virole 72 à la création d'un siphon bloquant la circulation de l'air dans l'espace 56. La comustion est ainsi limitée par la quantité d'oxygène présente. De plus, un automatisme peut commander la fermeture du circuit de refroidissement du fond. Enfin, comme on a indiqué précédemment que l'espace 56 constitue en fait la partie basse du circuit de refroidissement, il est clair qu'en cas de percement du fond 12a, la fuite de sodium s'arrêtera lorsque l'espace 56 est rempli, la chaleur du coeur 24 continuant alors à être évacuée par des moyens de refroidissement annexes non représentés pouvant notamment être placés à la périphérie de la cuve. En effet, la suppression des baffles nécessaires à la climatisation à 400°C de la paroi latérale des réacteurs de la technique antérieure autorise une évacuation latérale de la puissance résiduelle en cas d'accident.

On voit ainsi que le réacteur à cuve posée et à fond froid selon la présente invention présente des avantages essentiels par rapport aux réacteurs à neutrons rapides de la technique antérieure.

## Revendications

1. Réacteur nucléaire à neutrons rapides refroidi par un métal liquide à circuit primaire intégré, comprenant une cuve (12) remplie de métal liquide (20) et contenant le coeur (24) dur réacteur, une dalle de fermeture (14) obturant la cuve à sa partie supérieure et un puits de cuve (18) dans lequel est disposée ladite cuve, le fond (12a) de la cuve reposant sur le fond (52) du puits de cuve, des moyens (60, 56a, 56b, 70) étant prévus pour refroidir le fond de la cuve, caractérisé en ce que lesdits moyens de refroidissement refroidissent le fond de la cuve à une température au plus égale à environ 100°C et en ce que les zones internes de la cuve parcourues par une circulation forcée de métal liquide sont entièrement situées au-dessus d'un plan horizontal limite ($N_3$), ce dernier étant situé à une hauteur donnée au-dessus du plan horizontal supérieur ($N_1$) du fond de la cuve, ladite hauteur constituant une hauteur de transistion ($N_1 - N_3$) dans laquelle le métal liquide est immobilisé en stratification thermique.

2. Réacteur nucléaire selon la revendication 1, caractérisé en ce que la hauteur de transition ($N_1 - N_3$) est égale à au moins un dixième du diamètre de la cuve (12).

3. Réacteur nucléaire selon l'une quelconque des revendications 1 ou 2, caractérisé en ce que le fond de la cuve repose sur le fond du puits de cuve par l'intermédiaire de supports (54) formant entre les fonds un espace (56) dans lequel circule un fluide de refroidissement définissant lesdits moyens pour refroidir le fond de la cuve.

4. Réacteur nucléaire selon la revendication 3, caractérisé en ce que le fond (12a) de la cuve est sensiblement conique et repose sur les supports (54) par gravité.

5. Réacteur nucléaire selon l'une quelconque des revendications 3 et 4, caractérisé en ce que ledit espace (56) est divisé verticalement en un espace inférieur (56a) et un espace supérieur (56b) par un carénage (58), l'espace inférieur étant alimenté en fluide de refroidissement à sa périphérie externe par au moins une tuyauterie d'entrée (60) et communiquant avec l'espace supérieur à sa périphérie interne, le fluide de refroidissement étant évacué à la périphérie externe de l'espace supérieur par au moins une tuyauterie de sortie (70), la hauteur de l'espace supérieur (56b) étant inférieure à celle de l'espace inférieur (56a).

6. Réacteur nucléaire selon la revendication 5, caractérisé en ce que le carénage (58) est démantable pour autoriser une inspection du fond (12a) de la cuve.

7. Réacteur nucléaire selon l'une quelconque des revendications 5 ou 6, caractérisé en ce que les espaces inférieur et supérieur (56a, 56b) communiquent à leur périphérie interne par une chicane (72, 58a, 68) susceptible de se remplir de métal liquide en cas de fuite de la cuve, pour former un siphon arrêtant la circulation du fluide de refroidissement.

8. Réacteur nucléaire selon l'une quelconque des revendications précédentes, comprenant de plus au moins un échangeur de chaleur (38) assurant la transmission de la chaleur du métal liquide à un fluide secondaire, un collecteur (78) recevant le métal liquide ainsi refroidi, au moins une pompe (34) prélevant le métal liquide dans ledit collecteur et l'envoyant à la base du coeur nucléaire, caractérisé en ce que à l'intérieur dudit collecteur (78) sont disposés au-dessous des orifices de sortie (38b) du ou des échangeurs (38) des écrans métalliques (38c) pour immobiliser le métal liquide dans la partie inférieure dudit collecteur, correspondant à ladite hauteur de transition ($N_1 - N_3$), les parois du collecteur qui se prolongent sur cette hauteur étant ainsi soumises audit gradient thermique.

9. Réacteur nucléaire selon la revendication 8, caractérisé en ce que le métal liquide statique contenu dans ladite cuve (12) est refroidi par lesdits moyens (60, 56a, 56b, 70) pour refroidir le fond de la cuve à une température telle que la partie inférieure de ce métal est à l'état solide.

10. Réacteur nucléaire selon l'une quelconque des revendications précédentes, caractérisé en ce que des inclusions calorifuges (76) sont disposées à l'intérieur de ladite hauteur de transition (N₁—N₃), lesdites inclusions présentant une conductivité thermique inférieure à celle du métal liquide, de façon à limiter le flux thermique vers le bas sur ladite hauteur.

11. Réacteur nucléaire selon l'une quelconque des revendications précédentes, caractérisé en ce que la paroi latérale de la cuve (12) est raccordée à la dalle (14) par l'intermédiaire d'un soufflet de dilatation (12b) à ondes.

12. Réacteur nucléaire selon l'une quelconque des revendications précédentes, caractérisé en ce qu'une jupe (64) entoure l'ensemble de la paroi latérale de la cuve (12) et repose aur le fond (52) du puits de cuve de façon à supporter la dalle (14).

**Patentansprüche**

1. Flüssigmetallgekühlter, schneller Kernreaktor mit integriertem Primärkreislauf, mit einem Behälter (12), der mit Flüssigmetall (20) gefüllt ist und den Reaktorkern (24) enthält, einer Abdeckplatte (14), die den Behälter an seinem oberen Abschnitt und eine Behältergrube (18) abschließt, in der der Behälter angeordnet ist, wobei der Boden (12a) des Behälters auf dem Boden (52) der Behältergrube ruht, sowie Mitteln (60, 56a, 56b, 70), die zum Kühlen des Behälterbodens vorgesehen sind, dadurch gekennzeichnet, daß diese Mittel zum Kühlen den Behälterboden auf eine Temperatur von höchstens ungefähr 100° C kühlen und daß sich die inneren Bereiche des Behälters, die von einer erzwungenen Flüssigmetallströmung durchströmt werden, vollständig oberhalb einer horizontalen Grenzebene (N₃) befinden, die sich auf einer vorgegebenen Höhe oberhalb der oberen horizontalen Ebene (N₁) des Behälterbodens befindet, wobei diese Höhe eine Übergangshöhe (N₁—N₃) bildet, auf der das Flüssigmetall in thermischer Schichtung festgehalten ist.

2. Kernreaktor nach Anspruch 1, dadurch gekennzeichnet, daß die Übergangshöhe (N₁—N₃) wenigstens gleich einem Zehntel des Durchmessers des Behälters (12) ist.

3. Kernreaktor nach Anspruch 1 oder 2, dadurch gekennzeichnet, daß der Behälterboden auf dem Boden der Behältergrube mittels Stützen (54) ruht, die zwischen den Böden einen Raum (56) schaffen, in dem ein Kühlfluid strömt, welches die Mittel zum Kühlen des Behälterbodens darstellt.

4. Kernreaktor nach Anspruch 3, dadurch gekennzeichnet, daß der Boden (12a) des Behälters im wesentlichen konisch ist und durch seine Schwere auf den Stützen (54) ruht.

5. Kernreaktor nach Anspruch 3 oder 4, dadurch gekennzeichnet, daß der Raum (56) durch eine Verkleidung (58) in einen unteren Raum (56a) und einen oberen Raum (56b) unterteilt ist, daß der untere Raum an seinem Außenumfang durch wenigstens eine Röhrenleitung (60) mit Kühlfluid versorgbar ist und mit dem oberen Raum an seinem inneren Umfang in Verbindung steht, daß das Kühlfluid am äußeren Umfang des oberen Raumes mittels wenigstens einer Austrittsröhrenleitung (70) abführbar ist, daß die Höhe des oberen Raumes (56b) kleiner als diejenige des unteren Raumes (56a) ist.

6. Kernreaktor nach Anspruch 5, dadurch gekennzeichnet, daß die Verkleidung (58) entfernbar ist, um eine Überprüfung des Bodens (12a) des Behälters zu ermöglichen.

7. Kernreaktor nach Anspruch 5 oder 6, dadurch gekennzeichnet, daß der obere und der untere Raum (56a, 56b) an ihren inneren Umfängen über eine Schikane (72, 58a, 68) miteinander in Verbindung stehen, die sich im Falle eines Lecks des Behälters mit Flüssigmetall füllen kann, um einen die Kühlmittelströmung anhaltenden Verschluß zu bilden.

8. Kernreaktor nach einem der vorhergehenden Ansprüche, mit wenigstens einem Wärmetauscher (38), der die Überführung der Wärme des Flüssigmetalls an ein Sekundärfluid sicherstellt, einem das derart gekühlte Flüssigmetall aufnehmenden Sammler (78), wenigstens einer Pumpe (34), die das Flüssigmetall aus dem Sammler abzieht und dieses der Basis des Reaktorkernes zuführt, dadurch gekennzeichnet, daß im Inneren des Sammlers (78) oberhalb der Austrittsöffnungen (38b) des oder der Sammler (38) Metallschirme (38c) angeordnet sind, um das Flüssigmetall in dem unteren Teil des Sammlers, welcher der Übergangshöhe (N₁—N₃) entspricht, festzuhalten, und daß die Wände des Sammlers, die bis zu dieser Höhe reichen, somit dem Wärmegradienten ausgesetzt sind.

9. Kernreaktor nach Anspruch 8, dadurch gekennzeichnet, daß das in dem Behälter (12) enthaltene, statische Flüssigmetall durch die Mittel (60, 56a, 56b, 70) zum Kühlen des Behälterbodens auf eine solche Temperatur gekühlt wird, daß sich der untere Teil dieses Metalls im festen Zustand befindet.

10. Kernreaktor nach einem der vorhergehenden Ansprüche, dadurch gekennzeichnet, daß im Inneren der Übergangshöhe (N₁—N₃) wärmedämmende Einschlüsse (76) angeordnet sind, die eine kleinere Wärmeleitfähigkeit als diejenige des Flüssigmetalls haben, so daß der Wärmestrom über diese Höhe nach unten begrenzbar ist.

11. Kernreaktor nach einem der vorhergehenden Ansprüche, dadurch gekennzeichnet, daß die Seitenwand des Behälters (12) mit der Abdeckplatte (10) über einen wellenförmigen Dehnungsausgleicher (12b) verbunden ist.

12. Kernreaktor nach einem der vorhergehenden Ansprüche, dadurch gekennzeichnet, daß ein Mantel (64) die gesamte Seitenwand des Behälters (12) umgibt und auf dem Boden (52) der Behältergruppe derart ruht, daß er die Abdeckplatte (14) trägt.

## Claims

1. Fast neutron reactor cooled by a liquid metal in an integral primary circuit, comprising a tank (12) filled with liquid metal (20) and containing the reactor core (24), a slab (14) covering the upper part of the tank and a tank pit (18) in which said tank is disposed, the bottom (12a) of the tank resting on the bottom (52) of the tank pit, means (60, 56a, 56b, 70) being provided to cool the bottom of the tank, characterized in that said cooling means cool the bottom of the tank to a temperature of at least equal to around $100°C$ and in the internal zones of the tank through which there is a forced circulation of liquid metal are entirely located above a horizontal limiting plane ($N_3$), said latter being situated at a given height above the upper horizontal plane ($N_1$) of the bottom of the tank, said height constituting a transition height ($N_1 - N_3$) in which the liquid metal is immobilized with thermal stratification.

2. Nuclear reactor according to Claim 1, characterized in that the transition height ($N_1 - N_3$) is equal to at least a tenth of the diameter of the tank (12).

3. Nuclear reactor according to either one of Claims 1 and 2, characterized in that the bottom of the tank rests on the bottom of the tank pit by means of supports (54) thereby forming between said bottoms, a space (56) in which there circulates a cooling fluid defining said means for cooling the bottom of the tank.

4. Nuclear reactor according to Claim 3, characterized in that the bottom (12a) of the tank is substantially conical, and rests on the supports (54) by gravity.

5. Nuclear reactor according to either one of Claims 3 and 4, characterized in that said space (56) is divided into a lower space (56a) and an upper space (56b) by a shroud (58), said lower space being fed with cooling fluid at its external periphery by at least one inlet pipe (60) and communicating with the upper space at its internal end, the cooling fluid being removed at the external end of the upper space by at least one outlet pipe (70), the height of the upper space (56b) being less than that of the lower space (56a).

6. Nuclear reactor according to Claim 5, characterized in that the shroud (58) is removable to permit inspection of the bottom (12a) of the tank.

7. Nuclear reactor according to either one of Claims 5 and 6, characterized in that the lower and upper spaces (56a, 56b) communicate at their internal ends through a chicane (72, 58a, 68) capable of being filled with liquid metal in the case of leakage in the tank, to form a syphon stopping circulation of cooling fluid.

8. Nuclear reactor according to any one of the preceding Claims, comprising at least one heat exchanger (38) providing transmission of heat from the liquid metal to a secondary fluid, a manifold (78) receiving the thereby-cooled liquid metal, at least one pump (34) removing the liquid metal from said manifold and conveying it to the base of the reactor core, characterized in that metal screens (38c) are located above the outlets (38b) of said exchanger or exchangers (38) to immobilize liquid metal in the lower part of said manifold, corresponding to said transition height ($N_1 - N_3$), the manifold walls which extend over said height thereby being subjected to said thermal gradient.

9. Nuclear reactor according to Claim 8, characterized in that the static liquid metal contained in said tank (12) is cooled by said means (60, 56a, 56b, 70) for cooling the bottom of the tank to a temperature such that the lower part of the metal is in the solid state.

10. Nuclear reactor according to any one of the preceding Claims, characterized in that heat-insulating bodies (76) are located in the interior of said transition height ($N_1 - N_3$), said bodies having a thermal conductivity less than that of the liquid metal, whereby to limit the flow of heat downwards through said height.

11. Nuclear reactor according to any one of the preceding Claims, characterized in that the side wall of the tank (12) is connected to the slab (14) by means of a wave-form expansion bellows (12b).

12. Nuclear reactor according to any one of the preceding Claims, characterized in that a skirt (64) surrounds the entire side wall of the tank (12) and rests on the bottom (52) of the tank pit, whereby to support the slab (14).